# EUROPÄISCHE PATENTANMELDUNG

(11) **EP 1 705 434 A1**
(43) Veröffentlichungstag der Anmeldung: **27.09.2006**
(21) Anmeldenummer: 06002895.8
(22) Anmeldetag: 14.02.2006
(51) Int. Cl.: F24J 2/52, H01L 31/048

(54) **Befestigungsvorrichtung zur Befestigung eines Montageprofils für Solarmodule oder Solarkollektoren an ein Trägerprofil, insbesondere ein Trapez- oder Sandwichprofil**

(30) Priorität: 04.03.2005 DE 202005003717 U
(71) Anmelder: IBC Solar AG, 96231 Bad Staffelstein (DE)
(72) Erfinder: Müller, Alexander, 91301 Forchheim (DE); Geier, Sebastian, 96524 Neuhaus-Schierschnitz (DE)
(74) Vertreter: Berngruber, Otto

(57) **Zusammenfassung**

Befestigungsvorrichtung zur Befestigung eines Montageprofils für Solarmodule oder Solarkollektoren an ein Trägerprofil, insbesondere ein Trapez- oder Sandwichprofil, die einerseits mit dem Montageprofil und andererseits mit dem Trägerprofil verbindbar ist, wobei die Verbindung zwischen dem Montageprofil (2) und der Befestigungsvorrichtung (1) eine definiert spielbehaftete Verbindung ist, so dass über die bewegliche Aufnahme des Montageprofils (2) eine thermische Ausdehnung ausgeglichen wird.

## Beschreibung

Die vorliegende Erfindung betrifft eine Befestigungsvorrichtung zur Befestigung eines Montageprofils für Solarmodule oder Solarkollektoren an ein Trägerprofil, insbesondere an ein Trapez- oder Sandwichprofil gemäß dem Oberbegriff des Schutzanspruchs 1.

Üblicherweise werden zur Befestigung von Solarmodulen oder Solarkollektoren Montageprofile verwendet, welche die Solarmodule bzw. Solarkollektoren tragen und mittels Befestigungsvorrichtungen mit einem Sandwich- oder Trapezprofil verbunden werden. Die Sandwich- oder Trapezprofile sind beispielsweise mit einer Fassade oder einem Dach verbunden.

Es ist bekannt, zur Befestigung der Montageprofile Befestigungsvorrichtungen zu verwenden, welche eine feste bzw. spielfreie Verbindung zwischen dem Montageprofil und einem vorzugsweise als Trapez- oder Sandwichprofil ausgebildeten Trägerprofil realisieren. Hierbei entsteht jedoch der Nachteil, dass eine mögliche thermische Ausdehnung des Montageprofils und/oder des Trapez- bzw. Sandwichprofils nicht berücksichtigt wird, sodass es in nachteiliger Weise zu Verspannungen zwischen diesen Komponenten kommen kann. Insbesondere bei Solarmodulen in Solarkollektoren spielt die thermische Ausdehnung eine wichtige Rolle.

Der vorliegenden Erfindung liegt die Aufgabe zugrunde, eine Befestigungsvorrichtung zur Befestigung eines Montageprofils für Solarmodule oder Solarkollektoren an ein Trägerprofil, insbesondere ein Trapez- oder Sandwichprofil anzugeben, welche den aus dem Stand der Technik bekannten Nachteil vermeidet. Insbesondere soll durch die erfindungsgemäße Befestigungsvorrichtung eine thermische Ausdehnung der zu verbindenden Bauteile berücksichtigt werden, sodass Verspannungen vermieden werden.

Diese Aufgabe wird durch die Merkmale des Schutzanspruchs 1 gelöst. Weitere erfindungsgemäße Ausgestaltungen und Vorteile gehen aus den Unteransprüchen hervor.

Demnach wird eine Befestigungsvorrichtung zur Befestigung eines Montageprofils für Solarmodule oder Solarkollektoren an ein Trägerprofil, insbesondere an ein Trapez- oder Sandwichprofil vorgeschlagen, die einerseits mit dem Montageprofil und andererseits mit dem Trägerprofil verbindbar ist und derart ausgestaltet ist, dass die Verbindung zwischen dem Montageprofil und der Befestigungsvorrichtung eine definiert spielbehaftete Verbindung (d.h. eine Verbindung mit definiertem Spiel) ist.

Da die Befestigungsvorrichtung sowohl mit dem Montageprofil als auch mit dem Trapez- oder Sandwichprofil verbunden ist, wird also vorgeschlagen, die Verbindung der Befestigungsvorrichtung mit dem Montageprofil definiert spielbehaftet zu gestalten. Dadurch wird die bewegliche Aufnahme des Montageprofils ermöglicht, um auf diese Weise eine eventuelle thermische Ausdehnung auszugleichen. Hierbei kann die Verbindung zwischen der Befestigungsvorrichtung und dem Montageprofil mittels Befestigungselementen derart gestaltet sein, dass eine Bewegung des Montageprofils erst ab einer bestimmten Größe der wirkenden Kraft erfolgt.

Im Rahmen einer besonders vorteilhaften Ausführungsform der Erfindung ist zudem vorgeschlagen, die Befestigungsvorrichtung derart auszuführen, dass neben der definiert spielbehafteten Verbindung auch eine spielfreie Verbindung ermöglicht wird.

Hierbei kann im Rahmen einer bevorzugten Ausführungsform der Erfindung die spielbehaftete Verbindung der Befestigungsvorrichtung mit dem Montageprofil dadurch realisiert werden, dass die Befestigungsvorrichtung zumindest ein Langloch aufweist, durch das ein Befestigungselement zur Verbindung mit dem Montageprofil, beispielsweise eine Niete oder eine Schraube geführt wird, wobei sich das Langloch in Richtung der relevanten thermischen Ausdehnung des Montageprofils erstreckt. Durch diese Konzeption wird für den Fall einer thermischen Ausdehnung des Montageprofils eine Bewegung des Montageprofils zusammen mit dem fest mit dem Montageprofil verbundenen Befestigungselement entlang der Langlochs ermöglicht.

Im Rahmen einer vorteilhaften Ausführungsform der Erfindung ist die Befestigungsvorrichtung derart ausgestaltet, dass sie eine Grundfläche aufweist, von der aus sich zwei Schenkel im wesentlichen senkrecht erstrecken, wobei der Abstand zwischen den Schenkeln derart bemessen ist, dass er der Breite des Montageprofils entspricht, so dass das Montageprofil zwischen den Schenkeln aufgenommen wird. Die Höhe der Schenkel kann maximal der Höhe des Montageprofils entsprechen.

Hierbei erstreckt sich die Grundfläche in Richtung der der anderen Wand abgewandten Seite jeder Wand derart, dass diese Fläche zur Befestigung der Grundfläche mit dem Trapez- bzw. Sandwichprofil über Befestigungselemente dienen kann.

Im Rahmen einer besonders vorteilhaften Weiterbildung der Erfindung ist vorgesehen, dass die Befestigungsvorrichtung zumindest eine Führungsschiene aufweist, welche mit einer entsprechenden Nut bzw. Langnut des Montageprofils zusammenwirkt, um auf diese Weise eine geführte Bewegung des Montageprofils aufgrund einer möglichen thermischen Ausdehnung zu ermöglichen. In diesem Fall ist es besonders vorteilhaft, wenn die Befestigungsvorrichtung nur einen Schenkel, umfassend ein Langloch, aufweist.

Gemäß der Erfindung ist die Befestigungsvorrichtung vorzugsweise aus Leichtmetall hergestellt und als Strangpressprofil oder auch als Gussteil ausgeführt. Zudem können als Befestigungselemente für die Befestigung zwischen der Befestigungsvorrichtung und dem Montageprofil bzw. dem Trapez- oder Sandwichblech, Befestigungselemente verwendet werden, die eine kraft- und/oder formschlüssige Verbindung ermöglichen.

Die Erfindung wird im Folgenden anhand der beigefügten Figuren beispielhaft näher erläutert. Es zeigen:
Figur 1: Eine schematische Seitenansicht und eine entsprechende Draufsicht einer bevorzugten Ausführungsform einer Befestigungsvorrichtung gemäß der Erfindung;
Figur 2: Eine schematische perspektivische Ansicht einer bevorzugten Ausführungsform einer Befestigungsvorrichtung gemäß der Erfindung;
Figur 3: Eine schematische Ansicht eines Schenkels der Befestigungsvorrichtung;
Figur 4: Eine schematische perspektivische Ansicht einer weiteren bevorzugten Ausführungsform einer Befestigungsvorrichtung gemäß der Erfindung;
Figur 5: Eine schematische perspektivische Ansicht der Ausführungsform gemäß Figur 4 und eines mit ihr zu verbindenden Montageprofils;
Figur 6: Eine schematische perspektivische Ansicht einer erfindungsgemäßen Befestigungsvorrichtung im horizontal montierten Zustand;
Figur 7: Eine schematische perspektivische Ansicht einer erfindungsgemäßen Befestigungsvorrichtung im vertikal montierten Zustand; und
Figur 8: Eine Detailansicht der Befestigung aus Figur 7.

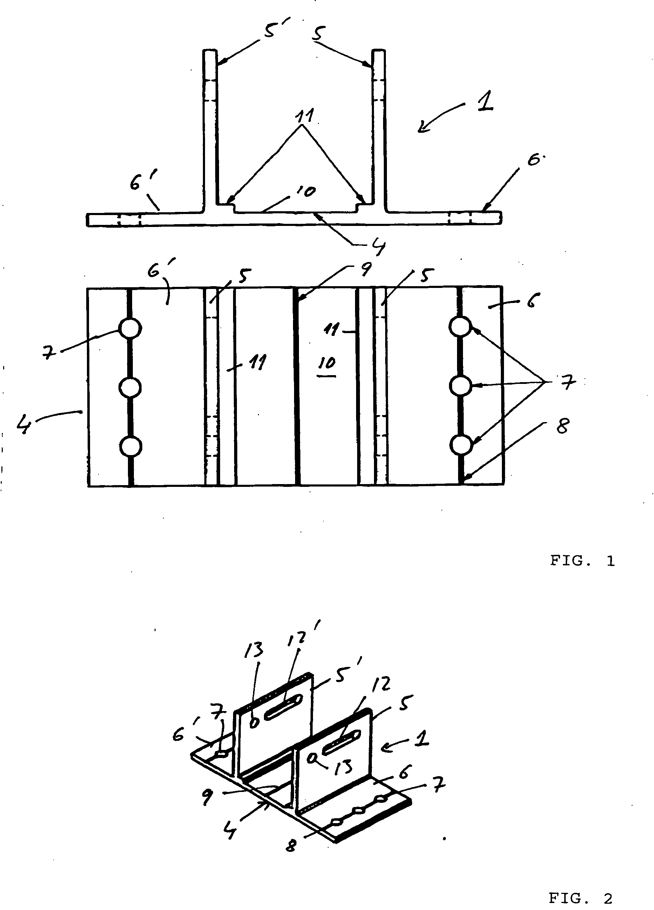

Gemäß der Erfindung und bezugnehmend auf Figuren 1 bis 8 ist die erfindungsgemäße Befestigungsvorrichtung 1 zur Befestigung eines Montageprofils 2 für Solarmodule oder Solarkollektoren an ein Trapez- oder Sandwichprofil 3 derart ausgestaltet, dass die Verbindung zwischen dem Montageprofil 2 und der Befestigungsvorrichtung 1 eine definiert spielbehaftete Verbindung ist, so dass über die bewegliche Aufnahme des Montageprofils 2 eine thermische Ausdehnung ausgeglichen wird.

Bei der in Figur 1 gezeigten Ausführungsform weist die Befestigungsvorrichtung 1 eine Grundfläche 4 auf, von der aus sich zwei Schenkel 5, 5' im wesentlichen senkrecht erstrecken, wobei der Abstand zwischen den Schenkeln 5, 5' derart bemessen ist, dass er der Breite des Montageprofils entspricht, so dass das Montageprofil zwischen den Schenkeln 5, 5' aufgenommen wird. Die Höhe der Schenkel 5, 5' kann maximal der Höhe des Montageprofils entsprechen. Wie aus Figur 1 ersichtlich, erstreckt sich die Grundfläche 4 in Richtung der dem anderen Schenkel abgewandten Seite jedes Schenkels derart, dass diese Flächen 6, 6' zur Befestigung der Grundfläche 4 mit dem Trapez- bzw. Sandwichprofil über Befestigungselemente dienen kann.

Wie in Figur 1 gezeigt, sind in den Flächen 6, 6' Löcher bzw. Bohrungen 7 vorgesehen, so dass die Befestigungsvorrichtung 1 mittels Schrauben oder Nieten spielfrei mit dem Trapez- bzw. Sandwichprofil verbindbar ist. Zum Erleichtern der Montage kann die Grundfläche 4 der Befestigungsvorrichtung 1 Führungsrillen 8, 9 für die Bohrungen 7 aufweisen. Optional kann die Grundfläche 4 innerhalb der durch die Schenkel 5, 5' definierten Fläche 10 Absätze 11 aufweisen, um einen definierten Abstand zwischen dem Montageprofil und der Fläche 10 zu gewährleisten.

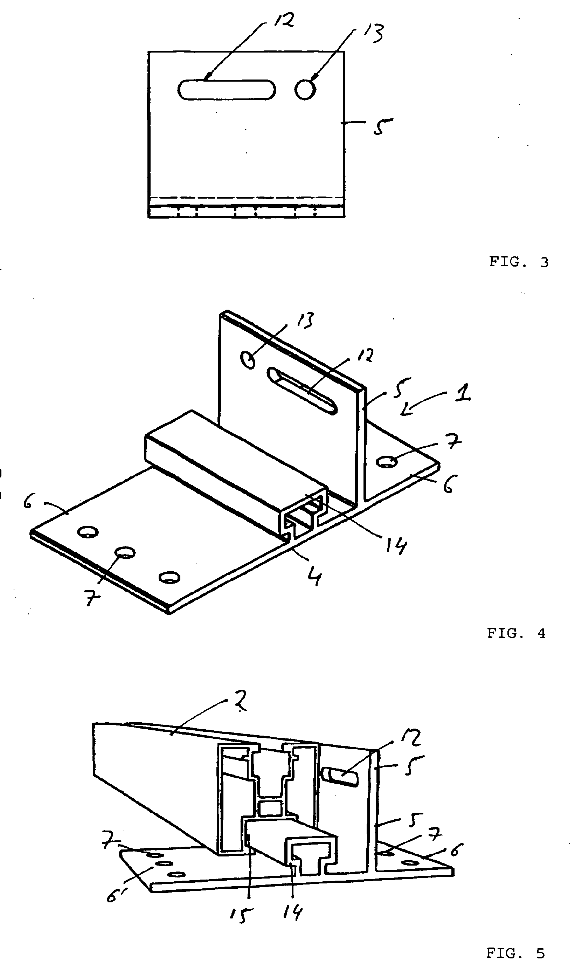

Zur Realisierung der erfindungsgemäß vorgesehenen Verbindung mit definiertem Spiel zwischen der Befestigungsvorrichtung 1 und dem Montageprofil weisen die Schenkel 5, 5' jeweils ein Langloch 12 bzw. 12' auf, wobei zum Zweck einer spielfreien Verbindung auch eine kreisrunde Bohrung 13 bzw. 13' vorgesehen sein kann. Dies wird in Figuren 2 und 3 veranschaulicht. Durch das Langloch 12, 12' kann zur Verbindung mit dem Montageprofil ein Befestigungselement, beispielsweise eine Niete oder eine Schraube geführt werden, wobei sich das Langloch in Richtung der relevanten thermischen Ausdehnung des Bauteils erstreckt. Zur Realisierung einer spielfreien Verbindung wird die Befestigungsvorrichtung mit dem Montageprofil beispielsweise mittels einer durch die kreisrunde Bohrung geführte Schraube oder Niete verbunden.

Bei der in Figuren 4 und 5 gezeigten Ausführungsform weist die Befestigungsvorrichtung 1 zumindest eine Führungsschiene 14 auf, welche mit einer entsprechenden Nut bzw. Langnut 15 entlang der Längsachse des Montageprofils 2 zusammenwirkt, um auf diese Weise eine geführte Bewegung des Montageprofils 2 aufgrund einer möglichen thermischen Ausdehnung sowie eine weitere Befestigung (jedoch nicht in Längsrichtung des Montageprofils 2 bzw. entlang der Führungsschiene 14) zu ermöglichen. In diesem Fall ist es besonders vorteilhaft, wenn die Befestigungsvorrichtung 1 nur einen Schenkel 5, umfassend ein Langloch 12, aufweist, da dieser in Verbindung mit der Führungsschiene zur Befestigung ausreicht. Zum Zweck der Realisierung einer spielfreien Verbindung kann zusätzlich auch eine kreisrunde Bohrung vorgesehen sein.

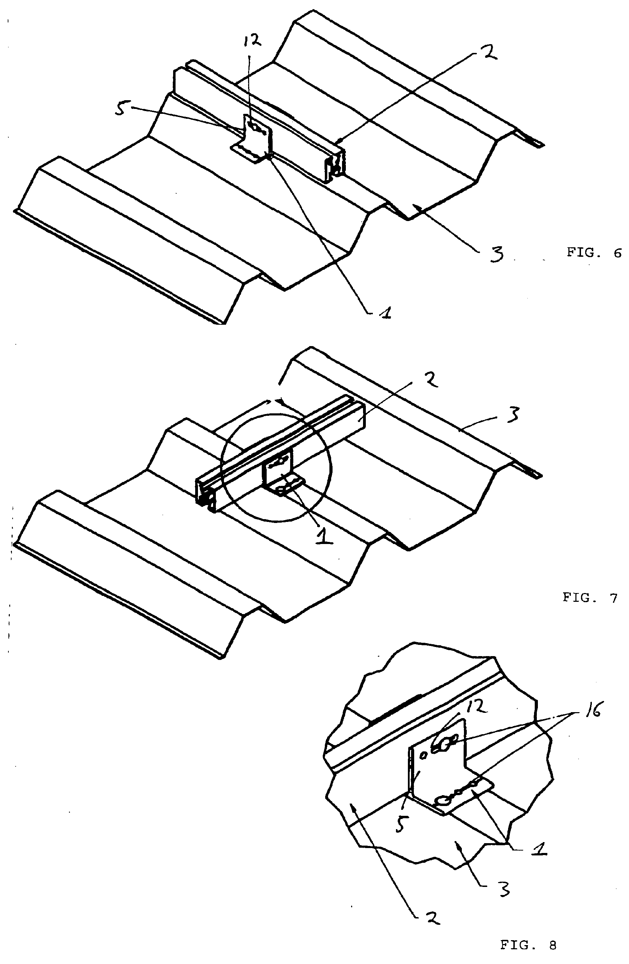

In Figur 6 wird die erfindungsgemäße Befestigungsvorrichtung 1 gemäß Figuren 1, 2 und 3 im montierten Zustand auf einem Trapezprofil gezeigt, wobei das Trapezprofil mit 3 bezeichnet ist. Mittels der erfindungsgemäßen Befestigungsvorrichtung ist auch eine vertikale Montage möglich, wie im Rahmen von Figur 7 veranschaulicht. Gemäß Figur 8 können als Befestigungselemente sowohl zwischen der Befestigungsvorrichtung 1 und dem Montageprofil 2 als auch zwischen der Befestigungsvorrichtung 1 und dem Trapezprofil 3 Schrauben und/oder Niete 16 verwendet werden, wobei eine durch das Langloch 12 geführte Schraube derart verschraubt ist, dass ein Spiel, vorzugsweise ab einer bestimmten wirkenden Kraft ermöglicht wird. Wenn eine Niete verwendet werden, ist es möglich, durch eine spezielle Technik die Befestigung über Formschluss zu erzielen.

Gemäß der Erfindung kann eine Abdichtung der Befestigungsvorrichtung zum Trapez- bzw. Sandwichprofil vorgesehen sein.

Selbstverständlich fällt auch jede konstruktive Ausbildung der erfindungsgemäßen Befestigungsvorrichtung soweit technisch sinnvoll, unter den Schutzumfang der vorliegenden Ansprüche, ohne die Funktion der Befestigungsvorrichtung, wie sie in den Ansprüchen angegeben ist, zu beeinflussen, auch wenn diese Ausbildungen nicht explizit in den Figuren oder in der Beschreibung dargestellt sind.

## Patentansprüche

1. Befestigungsvorrichtung zur Befestigung eines Montageprofils für Solarmodule oder Solarkollektoren an ein Trägerprofil, insbesondere ein Trapez- oder Sandwichprofil, die einerseits mit dem Montageprofil und andererseits mit dem Trägerprofil verbindbar ist, **dadurch gekennzeichnet, dass** die Verbindung zwischen dem Montageprofil (2) und der Befestigungsvorrichtung (1) eine definiert spielbehaftete Verbindung ist, so dass über die bewegliche Aufnahme des Montageprofils (2) eine thermische Ausdehnung ausgeglichen wird.

2. Befestigungsvorrichtung nach Anspruch 1, **dadurch gekennzeichnet, dass** sie auch eine spielfreie Verbindung mit dem Montageprofil (2) ermöglicht.

3. Befestigungsvorrichtung nach Anspruch 1 oder 2, **dadurch gekennzeichnet, dass** sie zumindest ein Langloch (12, 12') aufweist, durch das ein Befestigungselement (16) zur Verbindung mit dem Montageprofil (2) führbar ist, wobei sich das Langloch in Richtung der relevanten thermischen Ausdehnung des Montageprofils (2) erstreckt.

4. Befestigungsvorrichtung nach Anspruch 1, 2 oder 3, **dadurch gekennzeichnet, dass** sie eine Grundfläche (4) aufweist, von der aus sich zwei Schenkel (5, 5') im wesentlichen senkrecht erstrecken, wobei der Abstand zwischen den Schenkeln (5, 5') derart bemessen ist, dass er der Breite des Montageprofils (2) entspricht, so dass das Montageprofil (2) zwischen den Schenkeln (5, 5') aufgenommen wird, dass sich die Grundfläche (4) in Richtung der dem anderen Schenkel abgewandten Seite jedes Schenkels derart erstreckt, dass die so entstehenden Flächen (6, 6') zur Befestigung der Grundfläche (4) an dem Trägerprofil über Befestigungselemente und Bohrungen (7) dienen und dass die Schenkel (12, 12') jeweils ein Langloch (12, 12') zur Verbindung über ein Befestigungselement mit dem Montageprofil (2) aufweisen.

5. Befestigungsvorrichtung nach Anspruch 4, **dadurch gekennzeichnet, dass** die Schenkel (5, 5') zusätzlich zum Langloch (12, 12') eine kreisrunde Bohrung (13, 13') aufweisen, so dass über die Bohrungen (13, 13') und entsprechende Befestigungselemente eine spielfreie Verbindung zwischen dem Montageprofil (2) und der Befestigungsvorrichtung (1) realisierbar ist.

6. Befestigungsvorrichtung nach Anspruch 4 oder 5, **dadurch gekennzeichnet, dass** die Grundfläche (4) innerhalb der durch die Schenkel (5, 5') definierten Fläche (10) Absätze (11) aufweist, um einen definierten Abstand zwischen dem Montageprofil und der Fläche (10) zu gewährleisten.

7. Befestigungsvorrichtung nach Anspruch 1, 2 oder 3, **dadurch gekennzeichnet, dass** sie eine Grundfläche (4) aufweist, von der aus sich ein ein Langloch (12) aufweisender Schenkel (5) im wesentlichen senkrecht erstreckt, wobei durch das Langloch (12) ein Befestigungselement (16) zur spielbehafteten Verbindung mit dem Montageprofil (2) führbar ist und wobei die Befestigungsvorrichtung (1) zumindest eine Führungsschiene 14 aufweist, welche mit einer entsprechenden Nut bzw. Langnut (15) entlang der Längsachse des Montageprofils (2) zusammenwirkt, um eine geführte Bewegung des Montageprofils (2) aufgrund einer möglichen thermischen Ausdehnung sowie eine weitere Befestigung zu ermöglichen.

8. Befestigungsvorrichtung nach einem der vorangehenden Ansprüche, **dadurch gekennzeichnet, dass** sie aus Leichtmetall hergestellt ist.

9. Befestigungsvorrichtung nach einem der vorangehenden Ansprüche, **dadurch gekennzeichnet, dass** sie als Strangpressprofil oder als Gussteil ausgeführt ist.

10. Befestigungsvorrichtung nach einem der vorangehenden Ansprüche, **dadurch gekennzeichnet, dass** als Befestigungselemente für die Befestigung zwischen der Befestigungsvorrichtung (1) und dem Montageprofil (2) bzw. dem Trapez- oder Sandwichblech (3), Befestigungselemente verwendet werden, die eine kraft- und/oder formschlüssige Verbindung ermöglichen.
